**Europäisches Patentamt**

**European Patent Office**

**Office européen des brevets**

(19)

(11) Veröffentlichungsnummer: **0 182 828**
**B1**

(12) **EUROPÄISCHE PATENTSCHRIFT**

(45) Veröffentlichungstag der Patentschrift:
23.09.87

(21) Anmeldenummer: 85902479.6

(22) Anmeldetag: 31.05.85

(86) Internationale Anmeldenummer:
PCT/DE 85/00190

(87) Internationale Veröffentlichungsnummer:
WO 85/05605 (19.12.85 Gazette 85/27)

(51) Int. Cl.⁴: **B 62 D 55/112**, B 60 G 11/26,
F 16 F 9/08

(54) HYDROPNEUMATISCHE FEDERUNGSVORRICHTUNG.

(30) Priorität: 01.06.84 DE 3420557

(43) Veröffentlichungstag der Anmeldung:
04.06.86 Patentblatt 86/23

(45) Bekanntmachung des Hinweises auf die Patenterteilung:
23.09.87 Patentblatt 87/39

(84) Benannte Vertragsstaaten:
AT FR GB IT SE

(56) Entgegenhaltungen:
DE-A-3 241 461
DE-B-1 122 845
FR-A-792 738
FR-A-2 333 168
US-A-1 936 788
US-A-3 002 741
US-A-3 977 648

(73) Patentinhaber: Ficht GmbH, Spannleitenberg 1,
D-8011 Kirchseeon (DE)

(72) Erfinder: FICHT, Reinhold, Spannleitenberg 1,
D-8011 Kirchseeon (DE)
Erfinder: VILSMEIER, Walter, Göggenhofen 41,
D-8011 Grosshelfendorf (DE)

(74) Vertreter: Patentanwälte Dr. Solf & Zapf,
Zeppelinstrasse 53, D-8000 München 80 (DE)

EP 0 182 828 B1

**Beschreibung**

Die Erfindung betrifft eine hydropneumatische Federungs- bzw. Stoßdämpfervorrichtung der im Oberbegriff des Patentanspruchs 1 angegebenen Art.

Bei einer aus der DE-B- 2 227 139 bekannten Stoßdämpfervorrichtung dieser Art, die im übrigen nur für Notfälle als stoßdämpfender Puffer für Aufzüge benutzbar ist, hat der Federbalg eine zylindrische Form. Sein anderes Ende wird über das Widerlager und einen darauf befestigten Zylinder beaufschlagt, in dem die Gasfeder untergebracht ist. Die Gasfeder ist eine Metallblase, die über ein Ventil von außen druckvorspannbar ist. Zwischen der im Zylinder angeordneten Kammer für die Gasfeder und dem Federbalg ist ein Drosselventil eingesetzt. Nachteilig ist dabei, daß die Stoßdämpfervorrichtung zum Unterbringen erheblichen Platz beansprucht, da der die Gasfeder aufnehmende Zylinder praktisch eine Verlängerung des zylindrischen Federbalges darstellt. Da ferner die Außenkanten des Federbalges bei dessen Verformung im Gehäuse anliegend schleifen und da der Federbalg eine äußere Drahtarmierung aufweist, tritt bei der Deformation des Federbalges ein starker Verschleiß ein, der eine andauernde Benutzung dieser Stoßdämpfervorrichtung ausschließt. Aus der DE-A- 1 655 029 ist eine hydropneumatische Stoßdämpfvorrichtung zum Abfedern von Fahrzeugteilen gegenüber dem Fahrzeugrahmen bekannt, bei der ein Hydraulikzylinder mit einem mehrere über eine Membrane und Drosselstellen voneinander getrennte Gasdruckspeicher baulich vereinigt ist. Diese Stoßdämpfvorrichtung ist baulich sehr aufwendig und benötigt zudem unzweckmäßig viel Einbauraum zur Unterbringung. Sie weist zudem ein Dämpfungsverhalten auf, wie es für schwere Kraftfahrzeuge nur bedingt brauchbar ist.

Der Erfindung liegt die Aufgabe zugrunde, eine hydropneumatische Federungsvorrichtung der eingangs genannten Art zu schaffen, die bei einem außerordentlich kompakten Aufbau verschleißarm und hochbelastbar ist.

Die gestellte Aufgabe wird erfindungsgemäß durch die im kennzeichnenden Teil des Patentanspruchs 1 angegebenen Merkmale gelöst.

Bei der gewählten Kreisbogenform des Federbalgs hat dieser in der gestreckten Abwicklung des Kreisbogens eine große Arbeitslänge, die jedoch in Folge der Kreisbogenform auf engstem Raum untergebracht ist. Der Federbalg läßt sich . trotzdem sehr kräftig auslegen, um auch hohen Belastungen gewachsen zu sein. Trotz der hohen Belastbarkeit erhält das Gehäuse kompakte Abmessungen, so daß die Federungsvorrichtung vorteilhafterweise bei beschränktem Einbauraum einsetzbar ist. Da sich auch das Widerlager entlang dem Kreisbogen bewegt, steht ein großer nutzbarer Hub zur Verfügung, ohne daß dieser auf die kompakten Gehäuseabmessungen einen negativen Einfluß hat. Bei dieser Ausbildung lassen sich gezielt verschleißhemmende Vorkehrungen treffen, so daß die Federungsvorrichtung auch bei hohen Belastungen über lange Standzeiten dauernd arbeiten kann. Von besonderem Vorteil sind die kompakten Abmessungen der Federungsvorrichtung für die Aufhängung von Fahrwerksteilen schwerer Kraftfahrzeuge und insbesondere für de Federung bzw. Stoßdämpfung der Stützrollen der Ketten von Kettenfahrzeugen, z. B. Panzerfahrzeugen, wobei bei letzterer Anwendungsart eine Vielzahl von Stützrollen unter besonders beengten Einbauverhältnissen, insbesondere was die Bauhöhe anbelangt, gefedert abzustützen sind.

Eine besonders kompakte Bauform der Federungs vorrichtung ergibt sich bei der Ausführungsform von Anspruch 2, weil die einzelnen zusammenarbeitenden Komponenten sozusagen innerhalb des Kreises liegen, dessen Bogen die Form des Federbalges bestimmt. Da ja zwischen dem Federbalg und der Gasfeder keine mechanische Verbindung erforderlich ist, sondern nur eine Strömungsverbindung, läßt sich die Gasfeder im Hinblick auf die Kompaktheit der Federungsvorrichtung praktisch frei dem Federbalg zuordnen.

Für die Praxis hat sich eine Ausführungsform besonders bewährt, wie sie aus Anspruch 3 hervorgeht. Dabei wird etwas mehr als ein Halbkreisbogen von den Federbalg eingenommen, während der verbleibende zweite Teil des Vollkreises zur Unterbringung der Gasfeder nutzbar ist.

Eine verschleißarm arbeitende, kompakte Federungsvorrichtung wird weiterhin gemäß Anspruch 4 geschaffen, da bei dieser Ausbildung dynamische Abdichtungen entfallen, da der Federbalg mit seinen Abstütz- bzw. Beaufschlagungselementen baulich vereinigt ist und eine dichte und außerordentlich hochbelastbare Baueinheit bildet.

Damit hohe Belastungen dauerhaft aufgenommen werden können, ist eine Ausführungsform zweckmäßig, wie sie aus Anspruch 5 hervorgeht. Die Einzelsegmente ergeben in Richtung des Kreisbogens die gewünschte Verformbarkeit des Federbalges, während sie in radialer Richtung zu einer hohen Gestaltfestigkeit beitragen.

Vorteilhaft ist ferner eine Ausführungsform gemäß Anspruch 6, da diese in einer Seitenansicht keilförmige Gestalt der Einzelsegmente zu einer wirkungsvollen Bewegungsübertragung zwischen den Einzelsegmenten im Federbalg führt und zudem zur Erhöhung der Verschleißfestigkeit des Federbalges in der Federungsvorrichtung beiträgt.

Vorteilhaft ist ferner die Ausführungsform von Anspruch 7, da sich hier eine sehr belastbare Verbindung zwischen den Einzelsegmenten einerseits bewerkstelligen läßt und diese andererseits miteinander in strömungs- bzw. druckübertragender Verbindung stehen. Die exzentrische Lage des Durchganges in jedem Einzelsegment, wobei der Durchgang in Richtung zum Mittelpunkt des Kreisbogens, dem der Federbalg folgt, verlegt ist, hat den Vorteil, daß die Beweglichkeit des Federbalges nahe seinem Außenumfang besonders gut ist.

Eine weitere, die Belastbarkeit der Federungsvorrichtung trotz kompakter Außenabmessungen steigernde, vorteilhafte Maßnahme geht aus Anspruch 8 hervor. Die Sicken verbessern die Gestaltfestigkeit der Einzelsegmente und führen zu einem niedrigen mechanischen Verformungswiderstand des ungefüllten Federbalgs, was den Vorteil hat, daß die Kennlinie der Federungsvorrichtung durch den rein mechanischen Verformungswiderstand des Federbalgs nur in einem exakt vorherbestimmbaren Maß beeinflußt wird.

Ein weiterer, besonders wichtiger Gedanke ist ferner in Anspruch 9 enthalten. Diese formschlüssige Abstützung der Einzelsegmente bei der Verformung des Federbalges erhöht die Belastbarkeit der Federungsvorrichtung. Die Einzelsegmente sind gegen ein Ausbeulen sehr stabil, wobei sich dieser wünschenswerte Effekt mit zunehmender Verformung und steigendem Innendruck im Federbalg verstärkt.

Ein weiterer, zweckmäßiger Gedanke ist in Anspruch 10 enthalten. Auf diese Weise wird der Federbalg wiederum ohne dynamische Dichtelemente einfach mit der Kammer strömungsverbunden, in der die Gasfeder sitzt. Dies kommt der Verschleißarmut der Federungsvorrichtung zugute.

Eine weitere, zweckmäßige Ausführungsform geht aus Anspruch 11 hervor. An dieser Gleitbahn stützen sich die Einzelelemente und damit der Federbalg bei den Arbeitsbewegungen der Federungsvorrichtung ab, so daß die Verbindungsbereiche zwischen den Einzelsegmenten gegen lokale Überbeanspruchungen geschützt sind.

Die letztgenannte Abstützung des Federbalges beim Arbeiten der Federungsvorrichtung ist unabhängig vom Verformungsgrad der Gasfeder besonders wirksam, wenn die Ausführungsform von Anspruch 12 vorliegt. Das Unterbringen der Gleitbahn läßt sich hierbei herstellungstechnisch besonders einfach bewerkstelligen.

Die Verschleißarmut bzw. die mögliche lange Standzeit der Federungsvorrichtung wird ferner durch die Maßnahmen von Anspruch 13 gesteigert, weil der Abstützdruck zwischen dem Federbalg und der Gleitbahn hierbei auf große Flächenbereiche aufgeteilt wird, die zudem verschleißhemmend oder gleitfreudig ausgebildet sein können.

Hinsichtlich des kompakten Aufbaus der Federungsvorrichtung sind auch die Maßnahmen von Anspruch 14 zweckmäßig, wobei die Befestigungsart und die Ausbildung der Gasfeder zusätzlich den Vorteil hat, daß keine dynamischen Abdichtelemente erforderlich sind.

Ein weiterer, wichtiger Gedanke ist in Anspruch 15 enthalten. Bei den kompakten Abmessungen des Gehäuses und der speziellen Form kann die Federungsvorrichtung sehr sicher und stabil abgestützt werden, ohne daß dafür besondere Halterungen erforderlich sind. Allein aufgrund ihrer Konfiguration kann die Federungsvorrichtung die auf sie ausgeübten Belastungen dämpfen und die resultieren den Kräfte in die Lagerung übertragen. Sie braucht nur quer zur Ebene des Kreisbogens in eine entsprechende Gegenaufnahme eingeschoben und darin mit einfachen Mitteln lagegesichert zu werden.

Eine weitere, vorteilhafte Ausführungsform geht aus Anspruch 16 hervor. Bei dieser Ausbildung steht wieder der kompakte Aufbau der Federungsvorrichtung im Vordergrund, wobei die aufzunehmenden Belastungen zentral in das Gehäuse eingeleitet und mit günstigen Hebelarmen auf den Federbalg und die Gasfeder übertragen werden.

Schließlich ist auch das Merkmal von Anspruch 17 zweckmäßig, da sich mit dem Schwingenarm eine gewünschte Übersetzung der auf zunehmenden Belastung der Federungsvorrichtung erzielen läßt.

Anhand der Zeichnungen wird eine Ausführungsform des Erfindungsgegenstandes erläutert. Es zeigen:

Fig. 1 einen Querschnitt durch eine Federungsvorrichtung in ausgefederter Position, und

Fig. 2 einen der von Fig. 1 entsprechenden Querschnitt durch die Federungsvorrichtung in einer eingefederten Position.

Eine hydropneumatische Federungsvorrichtung 1, die beispielsweise zur federnden Aufhängung der Stützrollen der Kette von Kettenfahrzeugen wie Panzern, ferner als Aufzugs-Dämpfungsvorrichtung, als Dämpfungsvorrichtung bei Schmiedehämmern und bei Walzwerkseinrichtungen sowie für die Fahrwerkaufhängung schwerer Kraftfahrzeuge besonders geeignet ist, weist ein allseits geschlossenes, ggf. durch einen Deckel innen zugängliches Gehäuse 2 auf, das eine in Bezug auf einen Mittelpunkt M runde Gehauseaußenfläche 4 sowie in diese übergehende Paßflächen 4, 5 und 6 besitzt. In das Gehäuse 2 ragt senkrecht zur Zeichnungsebene eine Mittelwelle 7, auf der im Gehäuse 2 mit einer Nabe 8 ein Mitnehmerhebel 9, beispielsweise durch Verkeilung, befestigt ist. Auf der aus dem Gehäuse 2 herausragenden Mittelwelle 7 ist außen ein Schwingenarm 10 befestigt, der an seinem äußeren Ende ein Auge 11 besitzt, von dem ein nichtdargestellter Teil angelenkt sein kann.

Das Gehäuse 2 ist beispielsweise in Richtung der Pfeile 12a, 12b und 12c gehalten. Im Auge 11 werden Belastungen aufgenommen, die in Richtung eines Pfeiles 13 um die Mittelachse M der Mittelwelle 7 gerichtet sind, und danach trachten, den Schwingenhebel 10 entgegen dem Uhrzeigersinn zu verschwenken.

Im Gehäuse 2 ist eine kreisabschnittsförmige Ausnehmung 35 vorgesehen, deren Außenwand eine Gleitbahn 14, beispielsweise in Form einer im Querschnitt U-förmigen Beschichtung oder eines eingelegten Streifens, trägt. Die Ausnehmung 35 wird durch eine ebene Anschlagfläche 15 einerseits und eine annähernd radial zur Mittelachse M liegende Anschlagfläche 16 andererseits begrenzt. Im Gehäuse 2 ist ferner eine annähernd zylindrische Kammer 17 vorgesehen, die über einen Kanal 18 mit der Ausnehmung 35 in druckmittelübertragender Verbindung steht. Die Kammer 17 wird an einem Ende durch einen ebenen Boden 38 und am anderen Ende durch eine ebene Anschlagfläche 19 begrenzt, in die der Kanal 18 mündet.

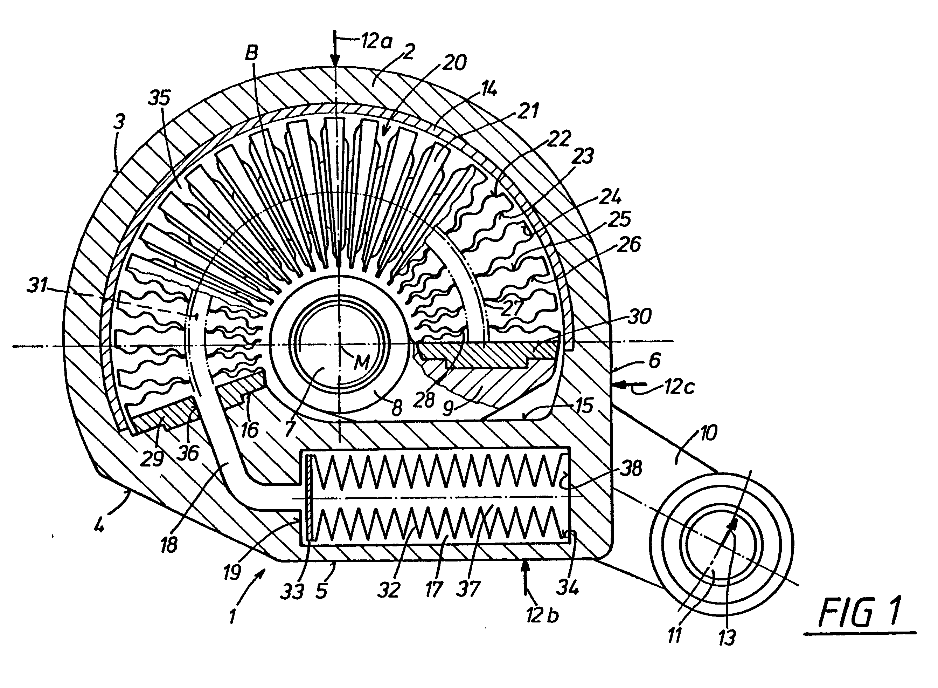

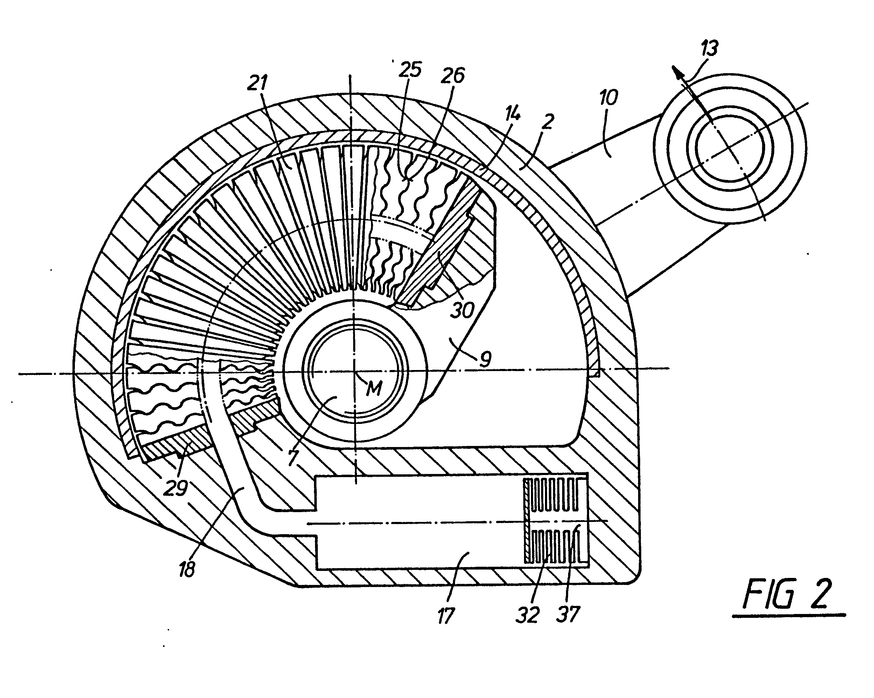

In der Ausnehmung 35 ist ein Federbalg 20 angeordnet, der in einem Kreisbogen B gebogen ist, dessen Mitte die Mittelachse M ist. Der Federbalg 20 besteht aus hohlen Einzelsegmenten 21 annähernd ringscheibenförmiger Gestalt. Die Einzelsegmente 21 bestehen aus Metallblech und sind an ihren Ober- und Unterseiten 22 und 23 mit einen Durchgang 27 konzentrisch umgebenden Sicken 25, 26 versehen. Die Sicken aneinander anliegender Ober- und Unterseiten 22, 23 benachbarter Einzelsegmente 21 passen formschlüssig ineinander. Die Einzelsegmente 21 sind angrenzend an die Durchgänge 27 in Bereichen 28 miteinander verschweißt. Die Einzelsegmente 21 haben in der Ansicht gemäß Fig. 1 und Fig. 2 eine annähernd keilförmige Gestalt, d.h., ihre Höhe nimmt in radialer Richtung, bezogen auf die Mittelachse M, zu. Jedes Einzelsegment 21 besitzt einen verbreiterten Randbereich 24, der zur Anlage an der Gleitbahn 14 bestimmt ist, wenn der Federbalg - wie in Fig. 2 angedeutet - verformt wird. Das erste Einzelsegment 21 des Federbalges 20 ist nur als Hälfte ausgebildet und mit einem Boden 29 abgedichtet verschweißt, der auf der Fläche 16 anliegt und ggf. dort befestigt ist. Das letzte Einzelsegment 21 ist ebenfalls nur als Hälfte ausgebildet und mit einem Deckel 30 verschweißt, der auf dem Hebel 9 angebracht bzw. mit diesem verbunden ist. Die Durchgänge 27 der Einzelsegmente 21 bilden eine Leitung 31, die über eine Öffnung 36 im Boden 29 mit dem Kanal 18 verbunden ist.

In der Kammer 17 ist eine Gasfeder 32 in Form eines zylindrischen Faltenbalges untergebracht, der mit seinem Ende 34 am Boden 38 abgedichtet verschweißt ist und an seinem anderen Ende durch eine starre Platte 33 abgedichtet verschlossen ist. Der mit 37 bezeichnete Innenraum der Gasfeder 32 ist mit einem Gas unter einem bestimmten Druck gefüllt, derart, daß die Platte 33 an den Flächen 19 anliegt, wenn die Federungsvorrichtung 1 unbelastet und in der ausgefederten Position gemäß Fig. 1 steht. Der Federbalg 20, der Kanal 18 und die Kammer 17 sind hingegen mit einem Hydraulikmedium gefüllt. Für die Füllung der Federungsvorrichtung (Hydraulik- und Gasfüllung) sind entweder nicht dargestellte Ventileinrichtungen vorgesehen, oder werden die entsprechenden Komponenten beim Zusammenbau der Federungsvorrichtung gefüllt und dann hermetisch verschlosen. Als Hydraulikmedium kann z. B. Öl oder eine Dämpfpaste verwendet werden.

Das Funktionsprinzip der Federungsvorrichtung wird nachstehend anhand der Figuren 1 und 2 erläutert. In der Stellung gemäß Fig. 1 wirkt in Richtung des Pfeiles 13 nur eine statische Last oder gar keine Last. Die Gasfeder 32 ist entspannt bzw. weitgehend entspannt, der Hebel 9 liegt auf der Fläche 15 auf. Wenn nun eine stoßartige Belastung in Richtung des Pfeiles 13 im Auge 11 zu wirken beginnt, verschwenkt der Schwingenarm 10 entgegen dem Uhrzeigersinn und drückt über den Hebel 9 und den Deckel 30 den Federbalg 20 zusammen. Das dabei verdrängte Hydraulikmedium fließt über den Kanal 18 in die Kammer 17, wobei sich die Länge der Gasfeder 32 verkürzt. Als Folge davon entsteht im Hydraulikmedium und in dem Gasvolumen der Gasfeder nach dem Gesetz der polytropen Zustandsänderungen idealer Gase ein bestimmter Systemdruck. Dieser Systemdruck wirkt zwischen dem Boden 29 und dem Deckel 30 als Federkraft der Belastung entgegen. Bei der Verformung des Federbalges 20 legen sich die Sicken 25, 26 ineinander, da die Einzelsegmente zusammengedrückt werden. Bei steigendem Innendruck im Federbalg 20 werden die Einzelsegmente 21 jedoch durch die ineinandergreifenden Sicken aneinander und gegen ein Ausbeulen abgestützt. Sobald die Belastung im Auge 11 nachläßt oder abgebaut wird, drückt die wirksame Federkraft den Schwingenhebel 10 wieder in die Endstellung zurück, wobei sich die Gasfeder 32 wieder entspannen kann, wie auch der Federbalg 20. Bei der Verformungsbewegung des Federbalges 20 können sich die Flächenbereiche 24 an der Gleitfläche 14 abstützen. Um im Außenbereich des Federbalges 20, wobei der Verformungsbewegung die stärksten Relativbewegungen in Richtung des Kreisbogens B auftreten, eine möglichst gute Beweglichkeit des Federbalges zu erreichen, sind die Durchgänge 27 in den Einzelsegmenten exzentrisch in Richtung zur Mittelachse M hingelegt.

Die Kammer 17 könnte in Fig. 1 noch näher zur Fläche 16 und zur Fläche 15 hin gesetzt sein, so daß das Gehäuse zur Gänze rund ausgebildet und in eine runde Gegenaufnahme eingeführt werden könnte. Dann wären anstelle der Paßflächen 4, 5 und 6 andere, formschlüssig wirkende Mittel vorzusehen, um eine Verdrehung des Gehäuses 2 unter der Belastung in Richtung des Pfeiles 13 zu verhindern.

Im Gehäuse 2 könnten in Richtung der Mittelachse M mehrere Federbälge 20 mit unterschiedlichen Federungscharakteristika hintereinandergeschaltet und mit verschiedenartig ausgelegten Gasfedern kombiniert sein, so daß die Federungsvorrichtung 1 eine auf den jeweiligen Verwendungszweck ausgerichtete, vorherbestimmte Federwirkung erbringt.

**Patentansprüche**

1. Hydropneumatische Federungsvorrichtung, insbesondere für Fahrwerkteile schwerer Kraftfahrzeuge, mit einem zwischen relativ zueinander beweglichen Teilen einsetzbaren Federelement, das ein Gehäuse (2) für einen mit einem Hydraulikmedium gefüllten Federbalg (20) aufweist, der mit einer mit dem Hydraulikmedium gefüllten Kammer in Strömungsverbindung steht, in der eine unter dem hydraulischen Druck verformbare Gasfeder (32) angeordnet ist, wobei der Federbalg (20) mit einem Ende im Gehäuse abgestützt ist und am anderen Ende durch ein mit einem der beweglichen Teile (9) verbundenes Widerlager (30) beaufschlagbar ist, dadurch gekennzeichnet, daß der Federbalg (20) annähernd in eine Kreisbogenform gebogen ist und daß das Widerlager (30) entlang des Kreisbogens (B) bewegbar ist.

2. Hydropneumatische Federungsvorrichtung nach Anspruch 1, dadurch gekennzeichnet, daß sich der Federbalg (20) in unverformtem Zustand im Gehäuse (2) nur über einen ersten Teil eines Vollkreises erstreckt, und daß die Kammer (17) zumindest zum überwiegenden Teil im nicht vom Federbalg (20) eingenommenen, zweiten Teil des Vollkreises und im Gehäuse (2) angeordnet ist.

3. Hydropneumatische Federungsvorrichtung nach den Ansprüchen 1 und 2, dadurch gekennzeichnet, daß sich der Federbalg (20) über wenig mehr als einen Halbkreisbogen erstreckt.

4. Hydropneumatische Federungsvorrichtung nach wenigstens einem der Ansprüche 1 bis 3, dadurch gekennzeichnet, daß der Federbalg (20) am Abstützende mit einem im Gehäuse (2) festgelegten Boden (29) und am anderen Ende mit einem im Gehäuse (2) entlang dem Kreisbogen (B) bewegbaren, das Widerlager (30) bildenden Deckel jeweils dicht verschweißt ist.

5. Hydropneumatische Federungsvorrichtung nach wenigstens einem der Ansprüche 1 bis 4, dadurch gekennzeichnet, daß der Federbalg (20) ein aus flach aufeinander gelegten, vorzugsweise verschweißten, Einzelsegmenten (21) bestehender Metallbalg ist.

6. Hydropneumatische Federungsvorrichtung nach wenigstens einem der Ansprüche 1 bis 5, dadurch gekennzeichnet, daß jedes Einzelsegment (21) eine hohle Kreisringscheibe ist, deren Höhe - in Bezug auf den Kreisbogen (B) - radial nach außen zunimmt.

7. Hydropneumatische Federungsvorrichtung nach wenigstens einem der Ansprüche 1 bis 6, dadurch gekennzeichnet, daß jedes Einzelsegment (21) einen exzentrisch angeordneten Durchgang (27) besitzt, in dessen angrenzenden Bereichen (28) es mit dem benachbarten Einzelelement (21) verbunden ist.

8. Hydropneumatische Federungsvorrichtung nach wenigstens einem der Ansprüche 1 bis 7, dadurch gekennzeichnet, daß die Ober- und die Unterseite (22, 23) jedes Einzelsegments (21) mit zum Durchgang (27) konzentrisch umlaufenden Sicken (25, 26) versehen ist.

9. Hydropneumatische Federungsvorrichtung nach Anspruch 8, dadurch gekennzeichnet, daß die Sicken (25, 26) in benachbarten Ober- und Unterseiten (22, 23) benachbarter Einzelsegmente (21)- bei der Verformung des Federbalges (20) - formschlüssig und abstützend ineinandergreifen.

10. Hydropneumatische Federungsvorrichtung nach wenigstens einem der Ansprüche 1 bis 9, dadurch gekennzeichnet , daß die Durchgänge (27) der Einzelsegmente (21) eine Leitung (31) bilden oder aufnehmen, die über eine Öffnung (36) im Boden (29) und einen Verbindungskanal (18) mit der Kammer (17) verbunden ist.

11. Hydropneumatische Federungsvorrichtung nach wenigstens einem der Ansprüche 1 bis 10, dadurch gekennzeichnet, daß im Gehäuse (2) eine Gleitbahn (14) für die Einzelsegmente (21) des Federbalgs (20) angeordnet ist.

12. Hydropneumatische Federungsvorrichtung nach wenigstens einem der Ansprüche 1 bis 11, dadurch gekennzeichnet, daß sich die Gleitbahn (14) - bei unverformtem Federbalg (20) - vom Boden (29) bis über den Deckel (30) erstreckt und konzentrisch zum Kreisbogen (B) verläuft.

13. Hydropneumatische Federungsvorrichtung nach wenigstens einem der Ansprüche 1 bis 12, dadurch gekennzeichnet, daß jedes Einzelsegment (21) zur Anlage an der Gleitbahn (14) mit einem flachen Randbereich (24) ausgestattet ist, der ggf. gleitfreudig und/oder verschleißfest ausgebildet ist.

14. Hydropneumatische Federungsvorrichtung nach wenigstens einem der Ansprüche 1 bis 13, dadurch gekennzeichnet, daß die Gasfeder (32) ein, vorzugsweise zylindrischer, gestreckter Membran-Faltenbalg ist, der mit seinem einen Ende am Boden (8) der Kammer (17) abgedichtet befestigt und an seinem anderen, dem Kanal (18) zugewandten Ende durch eine starre Platte (33) abgedichtet ist.

15. Hydropneumatische Federungsvorrichtung nach wenigstens einem der Ansprüche 1 bis 14, dadurch gekennzeichnet, daß das Gehäuse (2) in seinem den Federbalg (20) enthaltenden Teil rund und in seinem die Gasfeder aufnehmenden Teil mit wenigstens einer Paßfläche (4, 5, 6) ausgebildet ist.

16. Hydropneumatische Federungsvorrichtung nach wenigstens einem der Ansprüche 1 bis 15, dadurch gekennzeichnet, daß das Gehäuse (2) - senkrecht zur Ebene des Kreisbogens (B) - von einer Mittelwelle (7) durchsetzt ist, die einen am Deckel (30) angreifenden Mitnehmerhebel (9) trägt.

17. Hydropneumatische Federungsvorrichtung nach wenigstens einem der Ansprüche 1 bis 16, dadurch gekennzeichnet, daß außerhalb des Gehäuses (2) an der Mittelwelle (7) ein Schwingenarm (10) angebracht ist.

## Claims

1. Hydropneumatic suspension system, in particular for parts of the running gear of heavy motorized vehicles, with a spring element which can be inserted between parts which can be moved relative to each other and comprises a casing (2) for a spring bellows (20) filled with a hydraulic medium and in flow-connection with a chamber (17) filled with a hydraulic liquid, in which chamber is situated a pneumatic spring (32) capable of distortion under the hydraulic pressure, whereby the spring bellows (20) is supported at one end in the casing and at the other end can be acted upon by a stop (30) connected to one of the moveable parts (9), characterized in that the spring bellows (20) is bent approximately into a circular arc shape, and in that the stop (30) can be moved along the circular arc (B).

2. Hydropneumatic suspension system according to Claim 1, characterized in that, in undistorted condition, the spring bellows (20) extends only over a first portion of a full circle in the casing (2) and in that the chamber (17) is arranged, at least for the most part, in the second portion of the complete circle, not taken up by the spring bellows (20), and in the casing (2).

3. Hydropneumatic suspension system according to Claims 1 and 2, characterized in that the spring bellows (20) extends over little more than a semicircular arc.

4. Hydropneumatic suspension system according to at least one of Claims 1 to 3, characterized in that the spring bellows (20) is seal-welded at the support end to a base (29) fixed in the casing (2) and at the other end to a cover which can be moved along the circular arc (B) in the casing (2) and forms the stop (30).

5. Hydropneumatic suspension system according to at least one of Claims 1 to 4, characterized in that the spring bellows (20) is a metal bellows consisting of individual segments (21) laid flat one on the other, preferably welded.

6. Hydropneumatic suspension system according to at least one of Claims 1 to 5, characterized in that each individual segment (21) is a hollow annular disc, the height of which - with respect to the circular arc (B) - increases radially outward.

7. Hydropneumatic suspension system according to at least one of Claims 1 to 6, characterized in that each individual segment (21) has an eccentrically arranged clearance (27), in the adjoining regions (28) of which it is connected to the neighbouring individual element (21).

8. Hydropneumatic suspension system according to at least one of Claims 1 to 7, characterized in that the upper and lower sides (22, 23) of each individual segment (21) is provided with beads (25, 26) running around concentrically to the clearance (27).

9. Hydropneumatic suspension system according to Claim 8, characterized in that the beads (25, 26) intermesh positively and supportively in neighbouring upper and lower sides (22, 23) of neighbouring individual segments (21) - during the distortion of the spring bellows (20).

10. Hydropneumatic suspension system according to at least one of Claims 1 to 9, characterized in that the clearances (27) of the individual segments (21) form or accommodate a line (31) which is connected via an opening (36) in the base (29) and a connecting channel (18) to the chamber (17).

11. Hydropneumatic suspension system according to at least one of Claims 1 to 10, characterized in that a slideway (14) for the individual segments (21) of the spring bellows (20) is arranged in the casing (20).

12. Hydropneumatic suspension system according to at least one of Claims 1 to 11, characterized in that - with undistorted spring bellows (20) - the slideway (14) extends from the base (29) to above the cover (30) and runs concentrically to the circular arc (B).

13. Hydropneumatic suspension system according to at least one of Claims 1 to 12, characterized in that each individual segment (21) is given a flat border region (24), which may possibly be of easy-sliding and/or wear-resistant design, for contact with the slideway (14).

14. Hydropneumatic suspension system according to at least one of Claims 1 to 13, characterized in that the pneumatic spring (32) is a, preferably cylindrical, stretched diaphragm bellows which is sealed off and fixed to the base (8) of the chamber (17) at its one end and is sealed off by a rigid plate (33) at its other end, facing the channel (18).

15. Hydropneumatic suspension system according to at least one of Claims 1 to 14, characterized in that the casing (2) is designed round in its part containing the spring bellows (20) and with at least one matching surface (4, 5, 6) in its part accommodating the pneumatic spring.

16. Hydropneumatic suspension system according to at least one of Claims 1 to 15, characterized in that the casing (2) has - perpendicular to the plane of the circular arc (B) - a central shaft (7) passing through it, which bears an en gaging lever (9) which engages with the cover (30).

17. Hydropneumatic suspension system according to at least one of Claims 1 to 16, characterized in that a rocker arm (10) is attached to the central shaft (7) outside the casing (2).

## Revendications

1. Dispositif de suspension hydropneumatique, en particulier pour des portions de châssis de véhicules lourds muni d'un organe à fonction de ressort pouvant être placé entre deux parties mobiles l'une par rapport à l'autre, cet comprenant un boîtier (2) pour un soufflet (20), rempli d'un fluide hydraulique qui est en communication avec une chambre remplie d'un fluide hydraulique, un ressort pneumatique (32), pouvant être déformé sous la pression hydraulique, étant disposé dans cette chambre, une extrémité du soufflet (20) s'appuyant dans le boîtier et l'autre extrémité pouvant être soumise à l'action d'un contre-appui (30) relié à l'une des parties mobiles (9), caractérisé en ce que le soufflet (20) est recourbé pour prendre sensiblement la forme d'un arc de cercle et que le contre-appui (30) peut se déplacer le long de l'arc de cercle.

2. Dispositif de suspension hydropneumatique selon la revendication 1, caractérisé en ce que le soufflet (20) s'étend, dans son état déformé, dans le boîtier seulement sur une première partie d'un cercle entier et que la chambre (17) est disposée, au moins pour a plus grande partie, dans la deuxième partie du cercle non occupée par le soufflet (20) et dans le boîtier 2.

3. Dispositif de suspension hydropneumatique selon les revendications 1 et 2, caractérisé en ce que le soufflet (20) s'étend sur un peu plus d'un demi-arc de cercle.

4. Dispositif de suspension hydropneumatique selon au moins l'une des revendications 1 à 3, caractérisé en ce que le soufflet (20) est hermétiquement soudé, par son extrémité d'appui à un fond (29) maintenu dans le boîtier (2) et, par son autre extrémité, à un couvercle pouvant se déplacer dans le boîtier (2) le long de l'arc de cercle (B) et constituant le contre-appui (30).

5. Dispositif de suspension hydropneumatique selon au moins l'une des revendications 1 à 4, caractérisé en ce que le soufflet (20) est un soufflet métallique composé de segments individuels (21) superposés à plat et avantageusement soudés.

6. Dispositif de suspension hydropneumatique selon au moins l'une des revendications 1 à 5, caractérisé en ce que chaque segment individuel (21) est un disque circulaire creux dont la hauteur - par rapport à l'arc de cercle - augmente radialement vers l'extérieur.

7. Dispositif de suspension hydropneumatique selon au moins l'une des revendications 1 à 6, caractérisé en ce que chaque segment individuel (21) possède un passage excentrique (27) dans les régions adjacentes (28) duquel il est relié au segment individuel (21) voisin.

8. Dispositif de suspension hydropneumatique selon au moins l'une des revendications 1 à 7, caractérisé en ce que la face supérieure et inférieure (22, 23) de chaque segment individuel (21) est munie de moulures (25, 26) s'étendant concentriquement par rapport au passage (27).

9. Dispositif de suspension hydropneumatique selon la revendication 8, caractérisé en ce que les moulures (25, 26) dans des faces supérieures et inférieures (22, 23) voisines de segments individuels adjacents (21) s'emboîtent mécaniquement lors de la déformation du soufflet (20).

10. Dispositif de suspension hydropneumatique selon au moins l'une des revendications 1 à 9, caractérisé en ce que les passages (27) des segments individuels (21) forment ou acueillent un conduit (31) qui est relié par une ouverture (36) dans le fond (29) et un canal de liaison (18) à la chambre (17).

11. Dispositif de suspension hydropneumatique selon au moins l'une des revendications 1 à 10, caractérisé en ce que, dans le boîtier (2), une glissière (14) pour les segments individuels (21) du soufflet (20) est disposée.

12. Dispositif de suspension hydropneumatique selon au moins l'une des revendications 1 à 11, caractérisé en ce que la glissière (14) s'étend, lorsque le soufflet (20) n'est pas déformé, du fond (29) jusque par-dessus le couvercle (30) et chemine concentriquement par rapport à l'arc de cercle (B).

13. Dispositif de suspension hydropneumatique selon au moins l'une des revendications 1 à 12, caractérisé en ce que chaque segment individuel (21) est muni, pour son application sur la glissière (14), d'une région du bord plane (24) qui est éventuellement réalisée de manière à glisser facilement et/ou à éviter l'usure.

14. Dispositif de suspension hydropneumatique selon au moins l'une des revendications 1 à 13, caractérisé en ce que le ressort pneumatique (32) est un soufflet allongé à membranes et plis, de préférence cylindrique, dont une extrémité est fixée hermétiquement au fond (8) de la chambre (17) et dont l'autre extrémité, dirigée vers le canal (18), est fermée hermétiquement par une plaque rigide (33).

15. Dispositif de suspension hydropneumatique selon au moins l'une des revendications 1 à 14, caractérisé en ce que le boîtier (2) est circulaire en ce qui concerne sa partie contenant le soufflet (20) et muni d'au moins une surface de contact (4, 5, 6) en ce qui concerne sa partie logeant le ressort pneumatique.

16. Dispositif de suspension hydropneumatique selon au moins l'une des revendications 1 à 15, caractérisé en ce que le boîtier (2) est traversé - perpendiculairement au plan de l'arc de cercle (B) - d'un arbre central (7) portant un levier d'entraînement (9) agissant sur le couvercle (30).

17. Dispositif de suspension hydropneumatique selon au moins l'une des revendications 1 à 16, caractérisé en ce qu'un bras oscillant (10) est disposé sur l'arbre central (7) à l'extérieur du boîtier (2).

FIG 1

FIG 2

0 182 828